Europäisches Patentamt

European Patent Office

Office européen des brevets

(11) Veröffentlichungsnummer: **0 203 474**
**B1**

(12) **EUROPÄISCHE PATENTSCHRIFT**

(45) Veröffentlichungstag der Patentschrift: **18.04.90**

(51) Int. Cl.⁵: **A 01 B 19/06, A 01 B 49/02**

(21) Anmeldenummer: **86106658.7**

(22) Anmeldetag: **14.05.86**

(54) **Rüttelegge.**

(30) Priorität: 25.05.85 DE 3518991
28.02.86 DE 3606527

(43) Veröffentlichungstag der Anmeldung:
03.12.86 Patentblatt 86/49

(45) Bekanntmachung des Hinweises auf die
Patenterteilung:
18.04.90 Patentblatt 90/16

(84) Benannte Vertragsstaaten:
AT BE CH DE FR GB IT LI LU NL SE

(56) Entgegenhaltungen:
EP-A-0 118 868       FR-A-2 354 036
CH-A- 469 426        FR-A-2 371 865
DE-A-1 938 979       FR-A-2 416 634
DE-A-2 728 432       FR-A-2 494 074
DE-A-3 125 326       NL-A-7 416 758
FR-A-2 155 836       US-A-4 088 083

Prospekt Amazonen-Werke "Rüttelegge mit
Packerwalze" RE 117, 11.84

(73) Patentinhaber: Amazonen-Werke H. Dreyer
GmbH & Co. KG
Am Amazonenwerk 9-13
D-4507 Hasbergen-Gaste (DE)

(72) Erfinder: Higgen, Reinhard
Gartenstrasse 1
D-2872 Hude i.O. (DE)
Erfinder: Reinke, Wilfried
August-Hamkenstrasse 69
D-2900 Oldenburg (DE)

(74) Vertreter: Patentanwälte Grünecker, Kinkeldey,
Stockmair & Partner
Maximilianstrasse 58
D-8000 München 22 (DE)

Courier Press, Leamington Spa, England.

**Beschreibung**

Die Erfindung betrifft eine Bodenbearbeitungsmaschine gemäß des Oberbegriffes des Anspruches 1.

Eine derartige Bodenbearbeitungsmaschine ist bereits durch den Prospekt Amazone Rüttelegge mit Packerwalze' RE 117 11.84 bekannt. Die dort gezeigte Rüttelegge, die auch in der DE—OS—1938979 beschreiben ist hat sich bereits vielfach in der Praxis bewährt. Die jeweilige Anlenkung der im wesentlichen seitlich neben dem Zinkenträger angeordneten Grenzstriegelemente an dem angetriebenen Zinkenträger, hat sich jedoch hinsichtlich der Festigkeit von Zinkenträger und Grenzstriegelelement als nicht vorteilhaft erwiesen. Die am hin- und herschwingenden Zinkenträger befestigten Grenzstriegelelemente blasten den Zinkenträger durch zusätzliches Gewicht, was zu einer Erhöhung der Massenkräfte beim Hin- und Herschwingen des Zinkenträgers führt und Zinkenbalken und Grenzstriegelelemente in Schwingungen versetzt. Diese Schwingungen können sich bis in den Resonanzbereich des Zinkenträgers aufbauen, so daß es zu Beschädigungen des Zinkenträgers, die sich z.B. in Form von Rissen zeigen, kommen kann. Das weiteren lösen sich infolge des Mitschwingens der Grenzstriegelelemente die Befestigungselemente, mit denen die Grenzstriegelelemente an dem Zinkenträger befestigt sind. Die Striegelbefestigung muß ständig kontrolliert werden, um ein selbsttätiges Lösen der Striegelbefestigung, was zu einem Verlieren der Grenzstriegelelemente führt, zu verhindern. Die Erfahrung hat aber gelehrt, daß diese Kontrolle nicht regelmäßig von den Benutzern dieser Maschinen durchgeführt werden, so daß es immer wieder vorkommt, daß Grenzstriegelelemente während ds Bodenbearbeitungsvorganges verloren gehen.

Um das den Zinkenbalken zusätzlich belastende Gewicht der Grenzstriegelelemente möglichst gering zu halten, sind die Grenzstriegelemente in einer leichten Bauweise ausgebildet. Diese leichte Bauweise bringt einige Nachteile hinsichtlich der Stabilität dieser Grenzstriegelelemente mit sich, so daß es beispielsweise beim Berühren der Grenzstriegelemente von Hindernissen zu Beschädigungen der Grenzstriegelemente kommen kann, was dazu führt, daß die seitlichen Erdwälle nicht ordnungsgemäß eingeebnet werden.

Außerdem wirken die Grenstriegelelemente seitlich der Rüttelegge lediglich als Rechen, so daß sie zwar die Erde verteilen können, nicht jedoch eine Verfestigung dieser Erde seitlich der Arbeitsbreite der nachfolgenden Packerwalze herbeiführen können.

Aus der französischen Druckschrift FR—A—2 416 634 ist bereits eine Bodenkombination bekannt, bei der am Rad einer Nachlaufwalze nach vorn zu einem vorlaufenden Bodenbearbeitungsgerät weisende Seitenflächen angeordnet sind, die die Aufgabe haben, zu verhindern, daß seitlich des Bodenbearbeitungsgerätes Erde angehäuft wird. Diese Seitenschilde weisen in Fahrtrichtung und bewegen keine Erde.

Es ist Aufgabe der Erfindung, eine Bodenbearbeitungsmaschine der eingangs genannten Art zu schaffen, die seitlich entstehenden Erdwälle beseitigt und ein gleichmäßig ebenes Saatbett schafft.

Diese Aufgabe wird in einer Bodenbearbeitungsmaschine gemäß den Merkmalen des Anspruchs 1 gelöst. Infolge der dort beschriebenen Maßnahme werden Elemente in Form von Scharen verwendet, die die seitlich außerhalb der Arbeitsbreite der Maschine im Bereich der Rüttelegge entstehenden Erdanhäufungen wieder zurück in den Arbeitsbereich der nachlaufenden Packerwalze führt, so daß auch diese Erde dort verdichtet werden kann. Außerdem wird der hin- und herschwingende Zinkenbalken entlastet, weil diese Schare an dem Rahmen der Nachlaufwalze angeordnet sind. Man verhindert dadurch auch eine Erhöhung der Massenkräfte, so daß die Zinkenträger in vorteilhafter Weise für Beschädigungen durch unzulässige Schwingungen geschützt sind. Durch die Anordnung der Schare am Rahmen der Nachlaufwalze entfällt das Mitschwingen dieser Schare, so daß auch ein selbstätiges Lösen der Schare unterbunden wird. Infolge der erfindungsgemäßen Maßnahmen sind die Schare in einer etwas schwereren, stabileren Ausführung ausgebildet, so daß ein Auftreffen der Schare auf ein Hindernis im wesentlichen zu keiner Beschädigung führt. Da das Schar an der Nachlaufwalze befestigt ist, braucht es nicht bei unterschiedlichen Arbeitstiefen der Rüttelegge eingestellt zu werden. Diese ist auf erfinderische Erkenntnis zurückzuführen, daß die Nachlaufwalze immer auf dem Saatbett abrollt. Es ergibt sich somit eine sehr einfache Anlenkung der Schare.

Die Schare sind in sich starr ausgebildet, und jeweils schräg zur Fahrtrichtung angestellt ist, wobei die Hinterkante des Schares sich beispielsweise vor der Nachlaufwalze befindet. Hierbei ist vorgesehen, daß die Hinterkante des Schares zumindest bis zu Außenkante der Nachlaufwalze ragt, wobei sich das Schar teilweise bis vor den äußeren Bereich der Nachlaufwalze erstrecken kann und die Unterkante des Schares sich zumindest etwa auf der Oberfläche des Saatbettes befindet. Infolge dieser Maßnahmen wird erreicht, daß die außerhalb der Arbeitsbreite der Nachlaufwalze von der Rüttelegge erzeugten seitlichen Erddämme wieder dem Arbeitsbereich der Nachlaufwalze zugeführt und somit eingeebnet werden, s daß ein gleichmäßiges ebenes Saatbett geschaffen wird. Außerdem werden nicht zerkrümelte größe Kluten zerkleinert, indem sie von der Walze überrollt werden.

In einer Ausführungsform in erfindungsgemäßer Weise ist vorgesehen, daß das Schar unter einem Winkel von 45° zur Fahrtrichtung angeordnet ist. Diese Scharanordnung wirkt sich günstig auf die Zuführung der Endteile in den Arbeitsbreich der Nachlaufwalze aus.

Es ist erfindungsgemäß vorgesehen, daß das Schar mit einem Tragarm an dem Rahmen der Nachlaufwalze befestigt ist, was eine einfache, besonders vorteilhafte Befestigung des Schares darstellt. Hierbei kann der Tragarm derart ausgebildet sein, daß er sowohl um eine zumindest annähernd in Fahrtrichtung als auch um eine schräg zur Fahrtrichtung verlaufende Gelenkachse schwenkbar angeordnet ist, und der Schwenkbereich jeweils durch einen die Arbeitsstellung bestimmenden Anschlag begrenzt ist. Infolge dieser Maßnahmen kann das über die Arbeitsbreite der Packerwalze hinausragende Schar in bequemer Weise von der Arbeits- in die Transportstellung und umgekehrt überführt werden, so daß die Maschine die für den Transport auf offentlichen Straßen vorgeschreibene Maximalbreite nicht überschreitet. Weiterhin kann sich das Schar infolge der Anlenkung frei auf- und abbewegen, so daß es sich den unterschiedlichen Bodenkonturen exakt anpassen und Hindernissen ausweichen kann.

In einer bevorzugten erfindungsgemäßen Ausführungsform ist vorgesehen, daß der Tragarm als U-förmiger Bügel ausgebildet ist, wobei an dem einen Ende des Bügels das Schar befestigt und das andere Ende des Bügels an dem Rahmen der Nachlaufwalze angebracht ist und ein kreuzgelenkähnliches Gelenk aufweisen kann.

Weiterhin ist in besonders bevorzugter Weise erfindungsgemäß vorgesehen, daß der Bügel in einer an dem Rahmen der Nachlaufwalze angeordneten Halterung, die eine aufrecht verlaufende Bohrung aufweise, angebracht ist. Zwischen dem Bügel und der Halterung ist zumindest ein die Arbeitsstellung bestimmender Anschlag angeordnet, der als Abscherbolzen ausgebildet ist.

In einer anderen Ausführungsform ist vorgesehen, daß zwischen dem Bügel und der Halterung ein federndes bzw. elastisches Element angeordnet ist, welches das Schar in die Arbeitsstellung drückt. Infolge dieser Maßnahme wird das am Tragarm angeordnete Schar vor Beschädigungen geschützt, da es beim Auftreffen auf Hindernissen aufweichen kann, so daß im wesentlichen keine Bruchgefahr für das Schar besteht. Das ferdernde Element sorgt dafür, daß das Schar nach Passieren des Hindernisses sofort wieder in die Arbeitsstellung zurückgeführt wird.

Die unterschiedlichen Einstellmöglichkeiten der Schare, die eine seitliche Verstellbarkeit und Einstellbarkeit sowie eine Höhenverstellung des Schares ermöglichen, wobei das Schar beispielsweise höhenverstellbar an dem Tragarm angeordnet sein kann, gestattet eine individuelle Einstellung der Schare auf die unterschiedlichen Arbeitstiefen der Bodenbearbeitungsmaschine und auf die Bodenbeschaffenheit.

Eine nach innen weisende Abkantung des Schares in seinem hinteren Bereich, bei der diese Abkantung zumindest annähernd quer zur Fahrtrichtung weist, annähernd aufrecht und schräg nach vorn zur Maschinenmitte geneigt verläuft, sorgt für ein gutes Zuführen der Erde in den Arbeitsbreich der Nachlaufwalze, so daß die seitlichen Erddämme vorzüglich eingeebnet werden und ein gleichmäßig ebenes Saatbett geschaffen wird. Zur besseren Führung des Schares weist dieses in seinem unteren Bereich eine nach vorn geneigt, in Maschinenmitte weisende Abkantung auf, die sich sehr vorteilhaft auf die Arbeitsqualität im Bereich der äußeren Zinken auswirkt.

Um das Schar zusätzlich vor Beschädigungen zu schützen, weist das Schar beispielsweise eine in Fahrtrichtung weisende Kufe, mit nach vorn ansteigender Gleitfläche auf, oder das Schar selbst ist mit einer schräg nach vorn ansteigenden Kante versehen. Das Schar wird infolge der konstruktiven Maßnahmen in besonders vorteilhafter Weise ausgehoben und über Hindernisse wie z.B. Steine oder Pflugkanten hinweggeführt.

In einer weiteren Ausführung ist erfindungsgemäß vorgesehen, daß sich der Zugpunkt für die Schare im vorderen Bereich der Schare befindet. Infolge dieser Maßnahme werden die Schare in besonders vorteilhafter Weise gezogen, so daß sie sich den Bodenkonturen bestens anpassen können. Auch wird das Ausweichverhalten der Schare beim Auftreffen auf Hindernisse wesentlich verbessert, da es einfach über die Hindernisse hinweggezogen wird. Das gesamte Führungsverhalten der Schare wird durch die gezogene Ausführungsform gegenüber der geschobenen Ausführungsform wesentlich verbessert, da es der Bewegungsrichtung nach- und nicht vorläuft.

Die erfindungsgemäße Ausführungsform sieht weiterhin vor, daß an dem Rahmen der Nachlaufwalze ein in Fahrtrichtung nach vorn ragender starrer Tragarm und am vorderen Ende dieses Tragarmes jeweils das Schar angeordnet ist. Hierbei ist vorgesehen, daß am vorderen Ende des Tragarmes das Schar mittels eines Gelenkes in aufrechter Ebene schwenkbar gelagert ist, wobei zwischen dem Gelenk und dem Schare ein weiterer Tragarm angeordnet ist. Dieses Schwenken des jeweiligen Schares wird durch eine schräg zur Fahrtrichtung verlaufende Schwenkachse, die sich in einem Abstand von dem Schar befindet, ermöglicht. Infolge dieser Maßnahmen wird die sich als besonders vorteilhaft erwiesene Anlenkung der Schar jeweils am Rahmen der Nachlaufwalze in besonders vorteilhafter Weise weitergebildet. Durch die Verlagerung des Zugpunktes der Schare an das vordere Ende des Tragarmes wird es möglich, das Schar während des Einsatzes zu ziehen, wodurch sich das Führungsverhalten des Schares entscheidend verbessert. Die Art und Weise der Anordnung der Schwenkasche ermöglicht dem Schar ein exaktes Anpassen an die unterschiedlichen Bodenkonturen. Gleichzeitig kann das Schar beim Auftreffen auf Hindernisse ausweichen und wird nach Passieren dieser Hindernisse sofort wieder in seine Arbeitsstellung zurückgeführt, ohne das es im wesentlichen zu Beschädigungen am Schar kommt. Hierdurch wird ein besonders wirkungsvolles, vor Schädigungen geschütztes Schar geschaffen, so daß die seitlichen Erddämme beseitigt und einebenes Saatbett geschaffen wird.

Eine Ausführungsform sieht außerdem erfindungsgemäß vor, daß am vorderen Ende des Schares auf der in Fahrtrichtung gesehen vorderen Seite eine Gleitkufe angeordnete ist, deren untere Kante in Fahrtrichtung gesehen schräg bzw. kurvenförmig nach oben ansteigend verläuft. Infolge dieser Maßnahmen wird das Schar bei Auftreffen auf ein Hindernis allmählich angehoben und gleitet einfach über das Hindernis hinweg. Hierbei ist in einer besonders bevorzugten Ausführungsform erfindungsgemäß vorgesehen, daß die Gleitkufe als U-förmiger Bügel ausgebildet ist. Hierdurch ergibt sich ein leichtes Schar das ein einfach herzustellendes Bauteil darstellt.

Weitere Einzelheiten der Erfindung sind der Beispielsbeschreibung und den Zeichnungen zu entnehmen. Hierbei zeigen

Fig. 1 die erfindungsgemäß ausgerüstete Bodenbearbeitungsmaschine in der Ansicht von vorne,

Fig. 2 die Bodenbearbeitungsmaschine gemäß Fig. 1 in der Draufsicht,

Fig. 3 die Anordnung des Tragarmes des Schares in erfindungsgemäßer Weise am Rahmen der Nachlaufwalze in Teilanscicht und in der Ansicht von hinten,

Fig. 4 der erfindungsgemäße Tragarm gemäß Fig. 3 in der Draufsicht,

Fig. 5 das zwischen dem Bügel und der Halterung angeordnete federne Elemente in vergrößerter Teilansicht,

Fig. 6 die Anordnung des Tragarmes in einer anderen erfindungsgemäßen Weise am Rahmen der Nachlaufwalze in der Ansicht von hinten,

Fig. 7 die Anordnung des Tragarmes gemäß Fig. 6 in der Draufsicht,

Fig. 8 die Anordnung des Tragarmes am Rahmen der Nachlaufwalze sowie das am Tragarm angeordnete, eine Kufe aufweisende Schar in der Seitenansicht,

Fig. 9 die Anordnung des Tragarmes des Schares mit einem kreuzgelenkähnlichen Gelenk am Rahmen der Nachlaufwalze ebenfalls in Teilansicht und in Ansicht von hinten,

Fig. 10 die Anordnung des Tragarmes gemäß Fig. 9 in der Draufsicht,

Fig. 11 eine weitere erfindungsgemäß ausgerüstete Rüttelegge in der Seitenansicht und

Fig. 12 eine Teilansicht der erfindungsgemäß ausgerüsteten Rüttelegge gemäß Fig. 11 in der Draufsicht.

Die Bodenbearbeitungsmaschine ist als Rüttelegge 1 mit einer Nachlaufwalze 8 ausgebildet. An dem Rahmen 2 der Rüttelegge 1 sind mit Hilfe der Schwingen 3 die beiden antriebbaren Zinkenträger 4 mit den als Zinken 5 ausgebildeten Bodenbearbeitungswerkzeugen angeordnet. Die Zinkenträger 4 und somit auch die Zinken 5 werden über das Taumelgetriebe 6 in hin- und herschwingender Weise angetrieben, indem das Taumelgetriebe 6 von der Schlepperzapfwelle des die Bodenbearbeitungsmaschine ziehenden und nicht dargestellten Schleppers in bekannter Weise angetrieben wird. An dem Rahmen 2 sind die Dreipunktkupplungselemente 7 angeordnet, über die die Rüttelegge 1 in bekannter Weise an die Dreipunktkupplungsvorrichtung eines Schleppers angebaut werden kann.

Hinter der Rüttelegge 1 ist die als Packerwalze ausgebildete Nachlaufwalze 8 angeordnet. Die Nachlaufwalze 8 weist den mit den Zacken 9 besetzten Walzenkörper 10 und den Rahmen 11 auf, in dem der Walzenkörper 10 drehbar gelagert ist. An dem Rahmen 11 sind die Streben 12 angeordnet, über die die Nachlaufwalze mit dem Rahmen 2 der Rüttelegge 1 verbunden ist. Die Arbeitstiefe der Zinken 5 wird durch die Nachlaufwalze 8, die immer auf der Bodenoberfläche 13 abläuft, bestimmt, denn die an dem Rahmen 2 der Rüttelegge 1 angeordneten Anschlagbolzen 14 liegen auf den Streben 12 auf. Durch das Umstecken der Anschlagbolzen 14 in andere Bohrungen 15 der am Rahmen 2 der Rüttelegge 1 angeordneten Stellstücke 16 kann die gewünschte Tiefe der Zinken eingestellt werden.

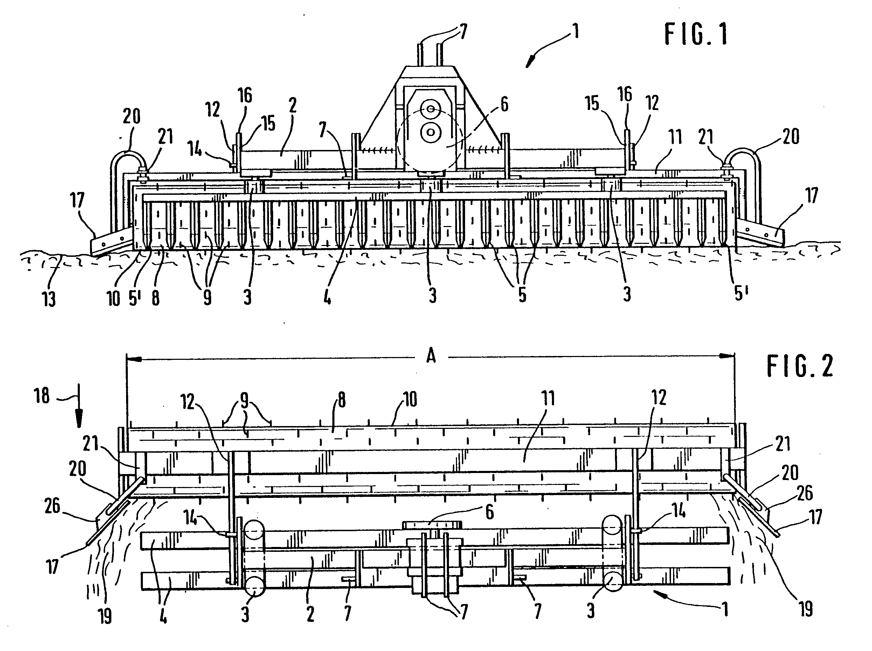

Seitlich neben den äußeren Zinken 5' der Zinkenträger 4 sind gemäß den Fig. 1 und 2 auf beiden Seiten der Rüttelegge die als Schare 17 ausgebildeten Grenzstriegelelemente jeweils aufrecht stehend, schräg zur Fahrtrichtung 18 der Rüttelegge 1 angestellt, angeordnet. Die Schare 17 haben die Aufgabe, das seitliche Herausfließen des Bodens aus dem Bereich der Zinken 5 zu begrenzen und die bereits von den Zinken 5 nach außen bewegten und zu kleinen Erdwällen angehäuften Bodenteile 19 wieder in den Arbeitsbereich A der nachlaufwalze 8 zurückzuführen, so daß der aufgelockerte Boden wieder von der Nachlaufwalze 8 eingeebnet und angedückt wird und ein gleichmäßig ebenes Saatbett entsteht. Diese Schare 17 sind an dem Tragarm 20 angeschraubt. Der Tragarm 20 wiederum ist mit Hilfe der Halterung 21 an dem Rahmen 11 der Nachlaufwalze 8 angelenkt.

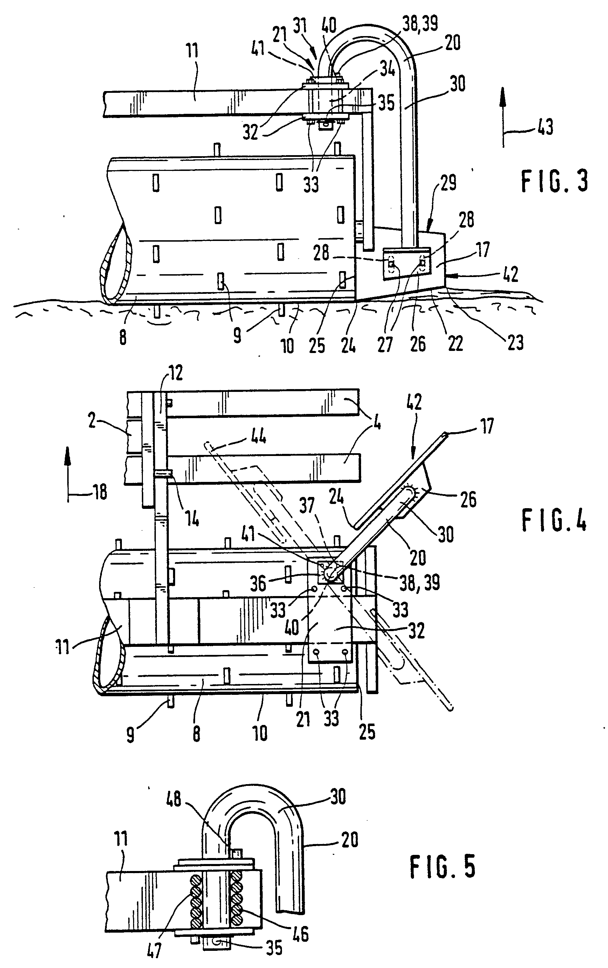

Die Fig. 3 und 4 zeigen die rechte Anordnung des als Schar 17 ausgebildeten Grenzstriegelelementes an dem Rahmen 11 der Nachlaufwalze 8. Das Schar 17 ist schräg zur Fahrtrichtung 18 angestellt, wobei sich due Unterkante 22 des Schares 17 auf der Oberfläche 23 des Saatbettes befindet und die Hinterkante 24 des Schares 17 bis zur Außenkante 25 der Nachlaufwalze 8 ragt. Dieses Schar 17 ist an dem Winkeleisen 26 mit Hilfe der Schrauben 27 angeschraubt und weist Langlöcher 28 zu seiner Höhenerstellung auf. An dem Winkeleisen 26 ist das untere Ende 29 des als U-förmigen Bügel 30 ausgebildeten Tragarmes 20 angeschweißt. Das andere Ende 31 des Bügels 30 ist in der am Rahmen 11 der Nachlaufwalze 8 befestigten Halterung 21 angeordnet. Die Halterung 21 besteht aus zwei Platten 32, die mit Hilfe der Schrauben 33 am Rahmen 11 der Nachlaufwalze 8 festgeklemmt werden. Die Platten 32 der Halterung 21 wiederum weisen die aufrecht verlaufende Bohrung 34 auf, in die der Bügel 30 von oben hineinragt und durch den Klappsplint 35 gesichert wird. An dem Bügel 30 ist die auf der oberen Platte 32 der Halterung 21 aufliegende rechteckige Platte 36 angeschweißt. Diese Platte 36 ist mit der Bohrung 37 ausgerüstet. Die Bohrung 37 nimmt den als Abscherbolzen 38 ausgebildeten Anschlag 39 auf, der in den Bohrungen 40 und 41 der Platte 32 gesteckt werden kann. Befindet sich der Anshlag 39 in der Bohrung 40, nimmt das am Tragarm 20 angeordnete Schar 17 die Arbeitsstellung 42 ein. Nach Entfernen des als Klappsplint 37 ausgebildeten Sicherungselementes läßt sich der U-förmige Bügel in Pfeilrichtung 43 anheben und in die mit gestrichelten Linien dargestellte Transportstellung 44 überführen, wobei sich der Anschlag 39 in der Bohrung 41 der Platte 32 befindet. Mit Hilfe des Klappsplintes 35 wird der Bügel 30 wieder gesichert. Durch das Überführen des Schares 17 von der Arbeitsstellung 42 in die Transportstellung 44 läßt sich die für den Transport auf öffentlichen Straßen vorgeschriebene Maximalbreite der Bodenbearbeitungsmaschine erreichen. Trifft das sich in Arbeitsstellung 42 befindliche Schar 17 auf ein festes Hindernis, schert der Abscherbolzen 38 ab und das Schar 17 nimmt die mit strichpunktierten Linien dargestellte Stellung 45 ein und wird so vor Beschädigungen geschützt. Nachdem der abgescherte Abscherbolzen 38 gegen einen neuen ersetzt worden ist, kann die Bearbeitung des Bodens fortgesetzt werden.

Die Wirkungsweise des Abschwerbolzens 38 läßt sich auch mit der Torsionsfeder 46, die gemäß der Fig. 5 als Zugfeder 47 ausgebildet ist, erreichen. Die Torsionsfeder 46 zieht das Schar 17 gegen den die Arbeitsstellung 42 fixierenden Anschlag 48. Beim Auftreten des Schares 17 auf ein festes Hindernis weicht dieses entgegen der Federkraft der Torsionsfeder 46 aus und schützt das Schar 17 so vor Beschädigungen. Nach Passieren des Hindernisses wird das Schar 17 sofort wieder in die Arbeitsstellung 42 zurückgeführt und die Bearbeitung des Bodens kann ohne Unterbrechung fortgesetzt werden.

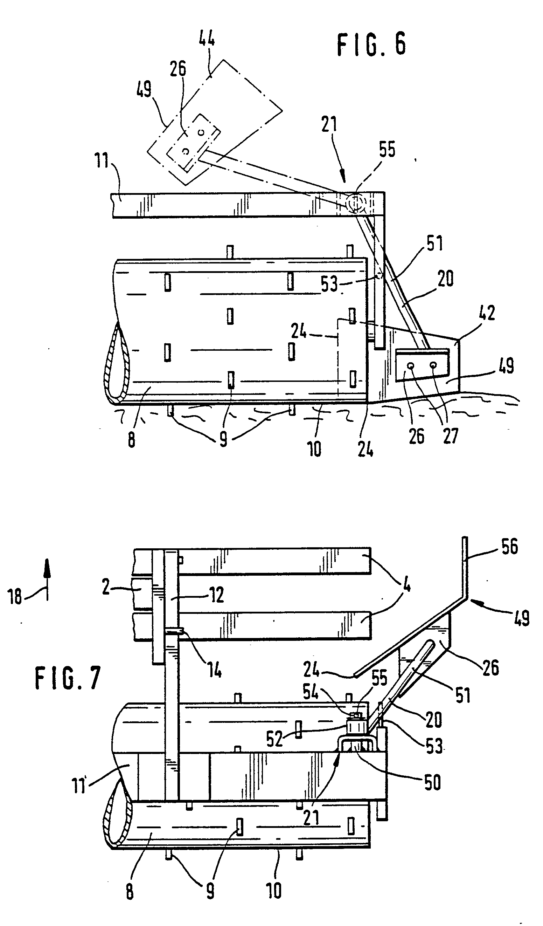

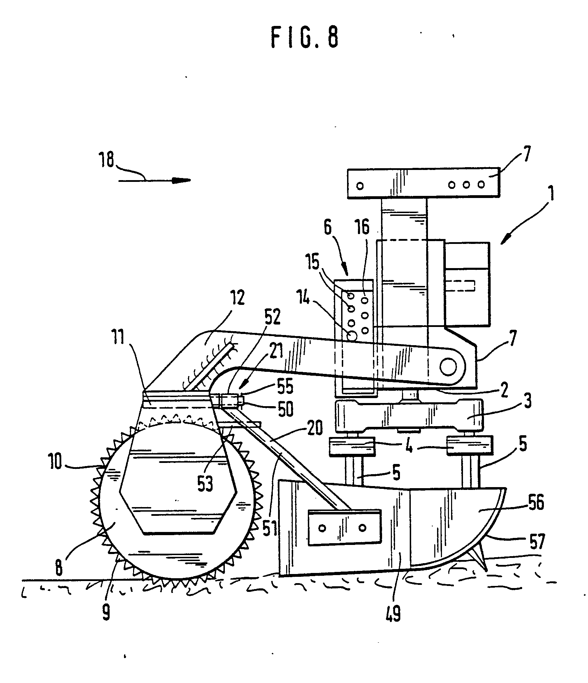

Eine andere Anordnung des Tragarmes 20 am Rahmen 11 der Nachlaufwalze 8 sowie eine andere Scharausbildung zeigen die Fig. 6 und 7. Hierbei befindet sich die hintere Kante 24 des schräg angestellten Schares 49 vor der Nachlaufwalze 8. Der Tragarm 20 ist um die in Fahrtrichtung 18 weisende Gelenkachse 50 schwenkbar am Rahmen 11 der Nachlaufwalze 8 angelenkt. Der Tragarm 20 ist als Rohr 51 ausgebildet und verbindet die auf der Gelenkachse 50 gelagerte Hülse 52 mit dem am Schar 49 angeschraubten, verstellbaren Winkeleisen 26. Am Rahmen 11 der Nachlaufwalze 8 ist ein die Arbeitsstellung 42 fixierender Anschlag 53 angebracht, der dafür sorgt, daß das Schar 49 nicht zu weit in den Boden eindringt bzw. ein nach unten Wegschwenken des Schares 49 beim Ausheben der gesamten Maschine verhindert wird. Der sich in Bohrung 54 der Gelenkachse 50 befindliche Sicherungssplint 55 verhindert das Verlieren des Schares 49. Durch ein Verschwenken des am Tragarm 20 angeordneten Schares 49 um die Gelenkachse 50 wird das Schar 49 von der Arbeitsstellung 42 in die in strichpunktierten Linien dargestellte Transportstellung 44 und umgekehrt gebracht. Das Schar 49 gemäß den Fig. 6 und 7 weist die in Farhtrichtung 18 weisende Kufe 56 auf. Die Fig. 8 zeigt die rechte Scharanordnung gemäß den Fig. 6 und 7 in der Seitenansicht. Die am Schar 49 angeordnete, in Fahrtrichtung 18 weisende Kufe 56 weise eine nach vorn ansteigende Gleitfläche 57 auf, so daß das Schar 49 an Hindernissen wie beispeilsweise Steine oder Pflugkanten durch die Kufe 56 ausgehoben wird. D.h., daß Schar 49 wird über das Hindernis hinweggeführt, indem es eine Schwenkbewegung um die Gelenkachse 50 ausfürt.

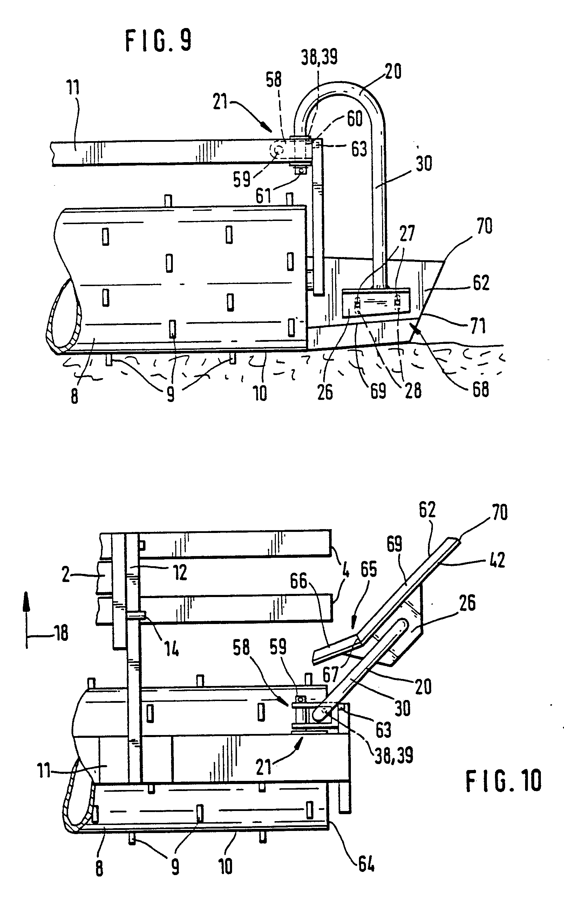

Die Halterung 21, mit dem der Tragarm 20 am Rahmen 11 der Nachlaufwalze 8 angelenkt ist, ist gemäß den Fig. 9 und 10 als U-förmiges Doppelgelenk 58 ausgebildet. Das Doppelgelenk 58 ist um die in Fahrtrichtung weisende Gelenkachse 59 schwenkbar am Rahmen 11 der Nachlaufwalze 8 befestigt und weist die weitere, aufrecht verlaufende, senkrecht zur Gelenkachse 59 angeordnete Bohrung 60 auf. In diese Bohrung 60 wird der als U-förmige Bügel 30 ausgebildete Tragarm 20 von oben hineingesteckt und durch den Sicherungssplint 61 gegen Verlieren gesichert. Zwischen dem U-förmigen Bügel 30 und der Halterung 21 ist der als Abscherbolzen 38 ausgebildete, die Arbeitsstellung 42 bestimmende Anschlag 39 angeordnet. An dem Bügel 30 ist das Winkeleisen 26 angeschweißt, an dem das die Langlöcher 28 aufweisende Schar 62 mit Hilfe der Schrauben 27 höhenverstellbar angeschraubt ist. Am Rahmen 11 der Nachlaufwalze 8 ist ein weitere, die Arbeitsstellung 42 fixierender Anschlag 63 angeordnet, der das Schar 62 an dem nach unten Wegschwenken beim Ausheben der Maschine hindert.

Das Schar 62 gemäß den Fig. 9 und 10 ist ebenfalls schräg zur Fahrtrichtung 18 angestellt und erstreckt sich bis vor den äußeren Bereich 64 der Nachlaufwalze 8, wobei das Schar 62 an seinem hinteren Bereich 65 eine nach hinten, quer zur Fahrtrichtung 18 weisende Abkantung 66 aufweist. Die Achse 67 dieser Abkantung 66 verläuft aufrecht. Diese Abkantung 66 sorgt für eine gute Zuführung der durch die Rüttelegge 1 nach außen gearbeiteten Bodenteile in den Bereich der Nachlaufwalze 8. Des weiteren weist das Schar 62 in seinem unteren Bereich 68 eine nach vorn geneigte, in Maschinemitte weisende Abkantung 69 auf, so daß sich der Abstand zwischen dem Schar 62 und dem Bodenbearbeitungswerkzeug 5 verringert, was sich günstig auf die Arbeitsqualitiät im Bereich der äußeren Zinken 5' auswirkt. Das Schar 62 weist an seiner der Fahrtrichtung 18 zugewandten Seite 70 eine Schräg nach vorn ansteigende Kante 71 auf, die das Schar 62 beim Auftreten auf Hindernisse aushebt und über diese hinwegführt, indem es eine Schwenkbewegung um die Gelenkachse 509 ausführt. Wird das Schar 62 aus irgendeinem Grunde nicht über das Hindernis hinweggehoben, weil das Hinderhins beispielsweise in Pfahl oder dg. ist, schert der Abscherbolzen 38 zwischen Bügel 30 und Hlaterung 21 ab, so daß das Schar 62 nach hinten wegschwenken kann und schützt das Schar 62 so vor Beschädigungen schützt. nach Erneuerung des abgescherten Abscherbolzens 38 wird die Bearbeitung des Bodens fortgesetzt. Zur Reduzierung der Transportbreite der Maschine auf die zulässige, für das Fahren auf öffenlichten Straßen vorgeschriebene Breite, werden die Schare 62 um die am Rahmen 11 der Nachlaufwalze 8 angeordneten, in Fahrtrichtung 18 weisenden Gelenkachsen 59 geschwenkt.

Im folgenden soll die grundsätzliche Funktionsweise der Grenzschare 17, 49, 62 anhand des Ausführungsbeispieles gemäß Fig. 2 beschrieben werden:

Die beiden Zinkenträger 4 mit den als Zinken 5 ausgebildeten Bodenbearbeitungswerkzeugen, werden über das Taumelgetriebe 6 von der Zapfwelle des die Rüttelegge 1 ziehenden Schleppers quer zur Fahrtrichtung 18 in hin- und herscheingender Weise angetrieben. Durch die in entgegengesetzter Richtung hin- und herschwingenden Zinkenträger 4 wird der Boden bearbeitet, so daß ein Gutes Saatbett entsteht. Der von den Zinken 5 des Zinkenträgers 4 bearbeitet, aufgelockerte Boden wird von der Nachlaufwalze 8 rückverfestigt, so daß ein gleichmäßig ebenes Saatbett entsteht, daß dem nachfolgend ausgesäten Saatgut optimale Wachtumsbedingungen bietet.

Die Grenzschare 17 sind mit Hilfe des Tragarmes 20 am Rahmen 11 der Nachlaufwalze 8 derart angelenkt, daß sie sich oberhalb der Bodenoberfläche befinden. Die Einstellung der Schare 17 gegenüber der Bodenoberfläche bleibt bedingt durch ihre vorteilhafte Anlenkung am Rahmen 11 der Nachlaufwalze 8 unverändert, da die Nachlaufwalze 8 ständig auf der Bodenoberfläche abrollt. Der Abstand zwischen den Zinkenträgern 4 und den Grenzscharen 17 ist derart gewählt, daß ein beispielsweise von den Zinkenträgern 4 durch die hin- und herschwingende Bewegung in den Bereich der Grenzschare 17 transportierter Stein nicht zwischen den Zinkenträger 4 und dem jeweiligen Grenzschar 17 eingeklemmt werden kann. Beim Auftreten des Grenzschares 17 auf ein Hindernis beliebiger Art kann das Grenzschar 17 nach hinten ausweichen, indem der zwischen dem Tragarm 20 und der Halterung 21 angeordnete Abscherbolzen 38 abschert und so das Schar 17 vor Beschädigungen schützt. Nachdem der abgeschwerte Abscherbolzen 38 gegen einen neuen ersetzt worden ist, läßt sich das Schar 17 wieder in der Arbeitsstellung 43 fixieren.

Durch die hin- und herschwingenden Zinkenträger 4 werden von den äußeren Zinken 5' Bodenteile 19 zu kleinen Erdwällen seitlich neben der Rüttelegge 1 angehäuft, die so nicht mehr von der Nachlaufwalze 8 eingeebnet werden können. Die Aufgabe der Schare 17 besteht, jetzt darin, die nach außen gearbeiteten Bodenteile 19 wieder in den Arbeitsbereich A der Nachlaufwalze 8 zurückzuführen. Die schräge Anordnung der Schare wirkt sich äußerst günstig auf das Fließverhalten der Bodenteile 19 aus, so daß diese der Nachlaufwalze 8 gleichmäßig zugeführt werden. Die Nachlaufwalze 8 sorgt für eine gute Rückverfestigung des aufgelockerten Bodens und schafft so ein gleichmäßig ebenes Saatbett.

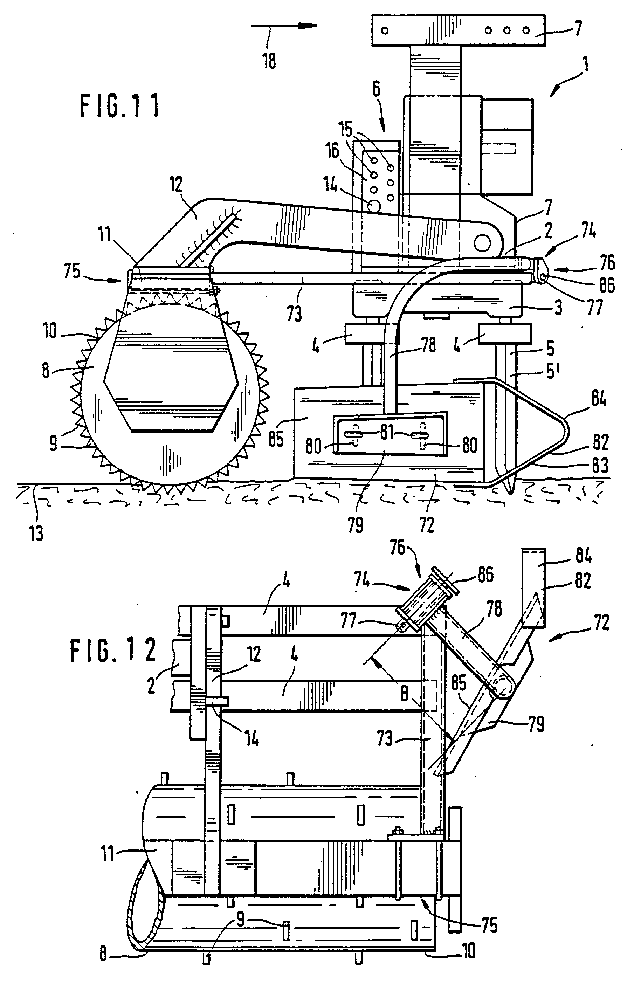

Seitlich neben den äußeren Zinken 5' der Zinkenträger 4 sind auf beiden Seiten der Rüttelegge gemäß Fig. 11 die Grenzschare 72 jeweils aufrecht stehend, schräg zur Fahrtrichtung 18 der Rüttelegge 1 angestellt, angeordnet. Die Schare 72 haben die Aufgabe, das seitliche Herausfließen des Bodens aus dem Bereich der Zinken 5 zu begrenzen und die bereits den Zinken 5 nach außen bewegten und zu kleinen Erdwällen angehäuften Bodenteile wieder in den Arbeitsbereich von der Nachlaufwalze 8 zurückzuführen, so daß der aufgelockerte Boden wieder von der Nachlaufwalze 8 eingeebnet und angedrückt wird und ein gleichmäßig ebenes Saatbett entsteht.

Die Schare 72 sind am vorderen Ende des Tragarmes 73 mittels des Gelenkes 74 in aufrechter Ebene schwenkbar gelagert. Der Tragarm 73 ist als in Fahrtrichtung 18 nach vorn ragender starrer Tragarm 73 ausgebildet und mit Hilfe der Halterung 75 an dem Rahmen 11 der Nachlaufwalze 8 befestigt. Am vorderen Ende des starren Tragarmes 73 ist das Gelenk 74 angeordnet und stellt den Zugpunkt 76 fur die Schare 72 dar. Das Gelenk 74 weist die schräg zur Fahrtrichtung 18 verlaufende Schwenkachse 77, die in einem Abstand B von Grenzschar 72 angeordnet ist, auf. An dem Gelenk 74 erstreckt sich der weitere Tragarm 78, der an dem Winkeleisen 79 angeschweißt ist. An diesem Winkeleisen 79 wird das Grenzschar 72 angeschraubt, wobei sich sowohl am Winkeleisen 79 aus auch am Grenzschar 72 Langlöcher 80 und 81 befinden. Mit Hilfe der Langlöcher 80, 81, läßt sich das Schar 72 einstellen.

Das Schar 72 besteht aus der parallel zur Fahrtrichtung 18 verlaufenden Gleitkufe 82, deren untere Kante 83 in Fahrtrichtung 18 parallel gesehen schräg bzw. kurvenförmig nach oben ansteigend verläuft und als U-förmiger Bügel 84 ausgebildet ist, und dem schräg zur Fahrtrichtung 18 verlaufenden Scharblech 85, das sich bis in den Arbeitsbereich der Nachlaufwalze 8 erstreckt. Die am Grenzschar 72 angeordnete Kufe 82 sorgt dagür, daß das Schar 72 an Hindernissen wie beispielsweise Steine oder Pfugkanten durch die Kufe 82 ausgehoben, d.h., über das Hindernis hinweggeführt wird, indem es eine Schwenkbewegung um die Schwenkachse 77 des Gelenkes 74 ausführt.

Die Aufgabe der Grenzschare 72, die in dem Zurückführen der von den hin- und herschwingenden Zinkenträgern 4 nach außen gearbeiteten Bodenteile in den Arbeitsbereich der Nachlaufwalze 8 besteht, wird durch die schräge Anordnung der Schare 72 begünstigt und wirkt sich äußerst günstig auf das Fließverhalten der Bodenteile aus, so daß diese der Nachlaufwalze 8 gleichmäßig zugeführt werden. Die Nachlaufwalze 8 sorgt für eine gute Rückverfestigung des aufgelockerten Bodens und schafft so ein gleichmäßig ebenes Saatbett. Durch die Ausbildung des Schares 72 als gezogenes Bauteil wird das Führungsverhalten dieser Schare 72 wesentlich verbessert, wodurch auch ein besseres Ausweichen bei Hindernissen erreicht wird.

Während des Transportes auf öffentlichen Straßen lassen sich die Grenzschare 72 durch Entfernen des Bolzens 86 des Gelenkes 74 in einfachster Weise abbauen.

## Patentansprüche

1. Bodenbearbeitungsmaschine, mit einer Rüttelegge, die zumindest zwei quer zur Fahrtrichtung hin- und herbewegbare Zinkenträger mit daran angeordneten Zinken enthält, mit einer hinter der Rüttelegge angeordneten Nachlaufwalze und mit je einem auf die seitlich neben der Rüttelegge entstehenden Erdwälle zum Einebnen wirkenden Element, dadurch gekennzeichnet, daß das Element als in sich starres Schar (17, 49, 69, 72) ausgebildet ist, daß das Schar schräg zur Fahrtrichtung und sich nach außen in Fahrtrichtung öffnend derart angestellt ist, daß die von der Rüttelegge nach außen gearbeiteten Bodenteile (19) wieder in den Arbeitsbereich (A) der Nachlaufwalze (8) zurückgeführt werden, und daß das Schar am Rahmen (11) der Nachlaufwalze (8) befestigt ist.

2. Bodenbearbeitungsmaschine nach Anspruch 1, dadurch gekennzeichnet, daß das Schar (17, 49, 62, 72) uner einem Winkel von 45° zur Fahrtrichtung (18) angeordnet ist.

3. Bodenbearbeitungsmaschine nach Anspruch 1, dadurch gekennzeichnet, daß die Ünterkante (22) des Schares (17, 49, 62, 72) sich zumindest etwa auf der Oberfläche (23) des Saatbettes befindet.

4. Bodenbearbeitungsmaschine nach Anspruch 1, dadurch gekennzeichnet, daß die Hinterkante (24) des Schares (17, 49, 62, 72) sich vor der Nachlaufwalze (8) befindet.

5. Bodenbearbeitungsmaschine nach Anspruch 4, dadurch gekennzeichnet, daß die Hinterkante (24) des Schares (17, 49, 62, 72) zumindest bis zur Außenkante (25) der Nachlaufwalze (8) ragt.

6. Bodenbearbeitungsmaschine nach Anspruch 5, dadurch gekennzeichnet, daß das Schar (17, 49, 62) sich teilweise bis vor den äußeren Bereich (64) der Nachlaufwalze (8) erstreckt.

7. Bodenbearbeitungsmaschine nach Anspruch 1, dadurch gekennzeichnet, daß das Schar (17, 49, 62) mit einem Tragarm (20) an dem Rahmen (11) der Nachlaufwalze (8) befestigt ist.

8. Bodenbearbeitungsmaschine nach Anspruch 7, dadurch gekennzeichnet, daß der Tragarm (20) um eine schräg zur Fahrtrichtung (18) verlaufende Gelenkachse (50, 69) schwenkbar angeordnet ist, und daß der Schwenkbereich durch einen die Arbeitsstellung (42) bestimmenden Anschlag (39, 48, 53, 63) begrenzt ist.

9. Bodenbearbeitungsmaschine nach Anspruch 7, dadurch gekennzeichnet, daß der Tragarm (20) als U-förmiger Bügel (30) ausgebildet ist, daß an dem einen Ende (29) des Bügels (30) das Schar (17, 49, 62) befestigt ist, und daß das andere Ende (31) des Bügels (30) an dem Rahmen (11) der Nachlaufwalze (8) angebracht ist.

10. Bodenbearbeitungsmaschine nach Anspruch 9, dadurch gekennzeichnet, daß der Bügel (30) in einer an dem Rahmen (11) der Nachlaufwalze (8) angeordneten Halterung (21), die eine aufrecht verlaufende Bohrung (34) aufweist, angebracht ist, und daß zwischen dem Bügel (30) und der Halterung (21) zumindest ein die Arbeitsstellung (42) bestimmender Anschlag (39) angeordnet ist.

11. Bodenbearbeitungsmaschine nach Anspruch 10, dadurch gekennzeichnet, daß der Anschlag (39) als Abscherbolzen (38) ausgebildet ist.

12. Bodenbearbeitungsmaschine nach Anspruch 10, dadurch gekennzeichnet, daß zwischen dem Bügel (30) und der Halterung (21) ein federndes bzw. elastisches Element (46) angeordnet ist, welches des Schar (17, 49, 62) in die Arbeitstellung (42) drückt.

13. Bodenbearbeitungsmaschine nach Anspruch 1, dadurch gekennzeichnet, daß das Schar (17, 49, 62) seitlich verstellbar und einstellbar angeordnet ist.

14. Bodenbearbeitungsmaschine nach Anspruch 1, dadurch gekennzeichnet, daß das Schar (17, 49, 62) aus der Arbeitsstellung (42) in eine Transportstellung (44) einschwenkbar oder einklappbar ist.

15. Bodenbearbeitungsmaschine nach Anspruch 1, dadurch gekennzeichnet, daß das Schar (17, 49, 62) höhenverstellbar angeordnet ist.

16. Bodenbearbeitungsmaschine nach Anspruch 7 und 15, dadurch gekennzeichnet, daß das Schar (17, 49, 62) an dem Tragarm (20) höhenverstellbar angeordnet ist.

17. Bodenbearbeitungsmaschine nach Anspruch 1, dadurch gekennzeichnet, daß das Schar (17, 49, 62) an seinem hinteren Bereich (65) eine nach innen weisende Abkantung (66) aufweist.

18. Bodenbearbeitungsmaschine nach Anspruch 17, dadurch gekennzeichnet, daß diese Abkantung (66) zumindest annähernd quer zur Fahrtrichtung (18) weist.

19. Bodenbearbeitungsmaschine nach Anspruch 17, dadurch gekennzeichnet, daß die Achse (67) der Abkantung (66) zumindest annähernd aufrecht verläuft.

20. Bodenbearbeitungsmaschine nach Anspruch 17, dadurch gekennzeichnet, daß die Achse (67) der Abkantung (66) schräg nach vorn und zur Maschinenmitte geneigt verläuft.

21. Bodenbearbeitungsmaschine nach Anspruch 1, dadurch geknnzeichnet, daß das Schar (17, 49, 62) zumindest im unteren Bereich (68) eine nach vorn geneigte, in Maschinenmitte weisende Abkantung (69) aufweist.

22. Bodenbearbeitungsmaschine nach Anspruch 1, dadurch gekennzeichnet, daß das Schar (17, 49, 62) eine in Fahrtrichtung (18) weisende Kufe (56) besitzt, daß die Kufe (56) eine nach vorn ansteigende Gleitfläche (57) aufweist.

23. Bodenbearbeitungsmaschine nach Anspruch 1, dadurch gekennzeichnet, daß das Schar (17, 49, 62) selbst eine schräg nach vorn ansteigende Kante (71) aufweist.

24. Bodenbearbeitungsmaschine nach Anspruch 7 oder 10, dadurch gekennzeichnet, daß der Tragarm (20) des Schares (17, 49, 62) mit einem kreuzgelenkähnlichn Gelenk (58) an dem Rahmen (11) der Nachlaufwalze (8) befestigt ist.

25. Bodenbearbeitungsmaschine nach Anspruch 1, dadurch gekennzeichnet, daß sich der Zugpunkt (76) für die Schare (72) im vorderen Bereich der Schare (72) befindet.

26. Bodenbearbeitungsmaschine nach Anspruch 25, dadurch gekennzeichnet, daß an dem Rahmen (11) der Nachlaufwalze (8) ein in Fahrtrichtung (18) nach vorn ragender starrer Tragarm (73) angeordnet ist, daß am vorderen Ende dieses Tragarmes (73) jeweils das schar (72) angeordnet ist.

27. Bodenbearbeitungsmaschine nach Anspruch 26, dadurch gekennzeichnet, daß am vorderen Ende des Tragarmes (73) des Schar (72) mittels eines Gelenkes (74) in aufrechter Ebene schwenkbar gelagert ist, wobei zwischen dem Gelenk (74) und dem Schar (72) ein Tragarm (78) angeordnet ist.

28. Bodenbearbeitungsmaschine nach Anspruch 27, dadurch gekennzeichnet, daß sich die Schwenkachse (77) in einem Abstand (B) von dem Schar (72) befindet.

29. Bodenbearbeitungsmaschine nach Anspruch 27, dadurch gekennzeichnet, daß die Schwenkachse (77) schräg zur Fahrtrichtung (18) verläuft.

30. Bodenbearbeitungsmaschine nach Anspruch 25, dadurch gekennzeichnet, daß am vorderen Ende des Schares (72) auf der in Fahrtrichtung (81) gesehen vorderen Seite eine Gleitkufe (82) angeordnet ist, deren untere Kante (83) in Fahrtrichtung (18) gesehen schräg bzw. kurvenförmig nach oben ansteigend verläuft.

31. Bodenbearbeitungsmaschine nach Anspruch 30, dadurch gekennzeichnet, daß diese Gleitkufe (82) als U-förmiger Bügel (84) ausgebildet ist.

**Revendications**

1. Machine de traitement du sol, avec un herse alternative qui comprend au moins deux supports de dents sur lesquels sont disposées des dents, et qui sont susceptibles d'être déplacés d'un mouvement d'aller et retour transversalement par rapport à la direction de déplacement de la herse, avec un cylindre suiveur disposé derrière la herse alternative et avec respectivement, un élément intervenant pour aplanir les remblais se formant de chaque côté au voisinage de la herse alternative, machine caractérisée en ce que l'élément est constitué par un soc rigide en soi (17, 49, 69, 72), ce soc étant positionné obliquement par rapport à la direction de déplacement et en s'ouvrant vers l'extérieur dans le sens du déplacement, de sorte que les parties de sol (19) entraînées vers l'extérieur par la herse alternative sont ramenées dans la zone de travail (A) du cylindre suiveur (8), tandis que le soc est fixé sur le châssis (11) du cylindre suiveur (8).

2. Machine de traitement du sol selon la revendication 1, caractérisée en ce que le soc (17, 49, 62, 72) est disposé sous un angle de 45° par rapport à la direction de déplacement (18).

3. Machine de traitement du sol selon la revendication 1, caractérisée en ce que le bord inférieur (22) du soc (17, 49, 62, 72) se trouve tout au moins, à peu près, sur la surface (23) du lit de semence.

4. Machine de traitement du sol selon la revendication 1, caractérisée en e que le bord arrière (24) du soc (17, 49, 62, 72) se trouve devant le cylindre suiveur (8).

5. Machine de traitement du sol selon la revendication 4, caractérisée en ce que le bord arrière (24) du soc (17, 49, 62, 72) s'étend au moins jusqu'au bord externe (25) du cylindre suiveur (8).

6. Machine de traitement de sol selon la revendication 5, caractérisée en ce que le soc (17, 49, 62) s'étend partiellement jusque devant la zone extérieure (64) du cylindre suiveur (8).

7. Machine de traitement du sol selon la revendication 1, caractérisée en ce que le soc (17, 49, 62) est fixé sur le châssis (11) du cylindre suiveur (8) par un bras porteur (20).

8. Machine de traitement du sol selon la revendication 7, caractérisée en ce que le bras porteur (20) est diposée de façon à pouvoir pivoter autour d'un axe d'articulation (50, 59) s'étendant obliquement par rapport à la direction de déplacement (18), tandis que l'étendue de ce pivotement est limitée par une butée (39, 48, 53, 63) déterminant la position de travail (42).

9. Machine de traitement du sol selon la revendication 7, caractérisée en ce que le bras porteur (20) est constitué par un étrier (30) en forme de U, le soc (17, 49, 62) étant fixé à l'une des extrémités (29) de l'étrier (30), tandis que l'autre extémité (31) de l'étrier (30) est montée sur le châssis (11) du cylindre suiveur (8).

10. Machine de traitement du sol selon la revendication 9, caractérisée en ce que l'étrier (30) est monté dans une fixation (21) disposée sur le châssis (11) du cylindre suiveur (8), cette fixation comportant un perçage vertical (34), tandis qu'entre l'étrier (30) et la fixation (21) est disposée au moins une butée (39) déterminant la position de travail (42).

11. Machine de traitement du sol selon la revendication 10, caractérisée en ce que la butée (39) est un goujon de cisaillement (38).

12. Machine de traitement du sol selon la revendication 10, caractérisée en ce que, entre l'étrier (30) et la fixation (21), est disposé un élément élastique (46) qui pousse le soc (17, 49, 62) dans la position de travail (42).

13. Machine de traitement du sol selon la revendication 1, caractérisée en ce que le soc (17, 49, 62) est disposé de façon à pouvoir être déplacé et réglé latéralement.

14. Machine de traitement du sol selon la revendication 1, caractérisée en ce que le soc (17, 49, 62) est susceptible de pivoter ou de basculer de la position de travail (42) dans une position de transport (44).

15. Machine de traitement du sol selon la revendication 1, caractérisée en ce que le soc (17, 49, 62) est réglable en hauteur.

16. Machine de traitement du sol selon les revendications 7 et 15, caractérisée en ce que le soc (17, 49, 62) est disposé sur le bras porteur (20) en étant réglable en hauteur.

17. Machine de traitement du sol selon la revendication 1, caractérisée en ce que le soc (17, 49, 62) comporte sur sa partie arrière (65) un pliage (66) orienté vers l'intérieur.

18. Machine de traitement du sol selon la revendication 17, caractérisée en ce que ce pliage (66) est au moins approximativement orienté transversalement par rapport à la direction de déplacement (18).

19. Machine de traitement du sol selon la revendication 17, caractérisée en ce que l'axe (67) du pliage (66) est au moins approximativement vertical.

20. Machine de traitement du sol selon la revendication 17, caractérisée en ce que l'axe (67) du pliage (66) est incliné obliquement vers l'avant et vers le milieu de la machine.

21. Machine de traitement du sol selon la revendication 1, caractérisée en ce que le soc (17, 49, 62) comporte, tout au moins dans sa partie inférieure (68) un pliage (69) incliné vers l'avant et orienté vers le milieu de la machine.

22. Machine de traitement du sol selon la revendication 1, caractérisée en ce que le soc (17, 49, 62) comporte un patin (56) orienté dans la direction de déplacement (18), ce patin (56) comportant une surface de glissement (57) montant vers l'avant.

23. Machine de traitement du sol selon la revendication 1, caractérisée en ce que le soc (17, 49, 62) comporte lui-même un bord (71) montant obliquement vers l'avant.

24. Machine de traitement du sol selon la revendication 7 ou 10, caractérisée en ce que le bras porteur (20) du soc (17, 49, 62) est fixé par une articulation (58) du type à la cardan sur le châssis (11) du cylindre suiveur (8).

25. Machine de traitement du sol selon la revendication 1, caractérisée en ce que le point de traction (76) pour le soc (72) se trouve dans la zone antérieure de ce soc (72).

26. Machine de traitement du sol selon la revendication 25, caractérisée en ce que sur le châssis (11) du cylindre suiveur (8) est disposé un bras porteur (73) rigide se prolongeant ves l'avant dans la direction de déplacement (18), le soc (72) étant disposé à l'extrémité antérieur de ce bras porteur (73).

27. Machine de traitement du sol selon la revendication 26, caractérisée en ce qu'à l'extrémité antérieure du bras porteur (73) le soc (72) est monté de façon à pouvoir pivoter dans un plan vertical au moyen d'une articulation (74), tandis qu'entre cette articulation (74) et le soc (72) est disposé un bras porteur (78).

28. Machine de traitement du sol selon la revendication 27, caractérisée en ce que l'axe de pivotement (77) se trouve à une distance (B) du soc (72).

29. Machine de traitement du sol selon la revendication 27, caractérisée en ce que l'axe de pivotement (77) s'étend obliquement par rapport à la direction de déplacement (18).

30. Machine de traitement du sol selon la revendication 25, caractérisée en ce qu'à l'extrémité antérieure du soc (72) et sur le côté antérieur selon la direction de déplacement (18), est disposé un patin de glissement (82) dont le bord inférieur (83) s'étend dans la direction de déplacement (18) en montant vers le haut obliquement ou bien sous forme de courbe.

31. Machine de traitement du sol selon la revendication 30, caractérisée en ce que le patin de glissement (82) est un étrier (84) en forme de U.

**Claims**

1. Ground cultivating machine, comprising a reciprocating harrow, which includes at least two tine carriers, which are reciprocable in a trasnverse direction relative to the direction of travel and are provided with tines which are disposed thereon, a follower roller which is disposed behind the reciprocating harrow, and a means which acts upon each of the banks of earth which are produced laterally adjacent the reciprocating harrow and need to be levelled, characterised in that the means is in the form of a coulter (17, 49, 69, 72), which is rigid per se, the coulter extends inclinedly relative to the direction of travel and is designed to open outwardly in the direction of travel such that the portions of earth (19), which are worked outwardly by the reciprocating harrow, are guided back again into the operating range (A) of the follower roller (8), and the coulter is mounted on the frame (11) of the follower roller (8).

2. Ground cultivating machine according to Claim 1, characterised in that the coulter (17, 49, 62, 72) is disposed at an angle of 45° relative to the direction of travel (18).

3. Ground cultivating machine according to Claim 1, characterised in that the lower edge (22) of the coulter (17, 49, 62, 72) is situated at least substantially on the surface (23) of the seed bed.

4. Ground cultivating machine according to Claim 1, characterised in that the rear edge (24) of the coulter (17, 49, 62, 72) is situated in front of the follower roller (8).

5. Ground cultivating machine according to Claim 4, characterised in that the rear edge (24) of the coulter (17, 49, 62, 72) protrudes at least as far as the outer edge (25) of the follower roller (8).

6. Ground cultivating machine according to Claim 5, characterised in that the coulter (17, 49, 62) partially extends to in front of the outer region (64) of the follower roller (8).

7. Ground cultivating machine according to Claim 1, characterised in that the coulter (17, 49, 62) is mounted on the frame (11) of the follower roller (8) by means of a supporting arm (20).

8. Ground cultivating machine according to Claim 7, characterised in that the supporting arm (20) is disposed so as to be pivotable about a pivot joint axle (50, 59), which extends inclinedly relative to the direction of travel (18), and the pivotal range is defined by a stop member (39, 48, 53, 63), which determines the operative position (42).

9. Ground cultivating machine according to Claim 7, characterised in that the supporting arm (20) is in the form of a U-shaped member (30), the coulter (17, 49, 62) is mounted on one end (29) of the U-shaped member (30), and the other end (31) of the U-shaped member (30) is attached to the frame (11) of the follower roller (8).

10. Ground cultivating machine according to Claim 9, characterised in that the U-shaped member (30) is mounted in a holder (21), which is disposed on the frame (11) of the follower roller (8) and is provided with a vertically extending bore (34), and at least one stop member (39), which determines the operative position (42), is disposed between the U-shaped member (30) and the holder (21).

11. Ground cultivating machine according to Claim 10, characterised in that the stop member (39) is in the form of a shearing pin (38).

12. Ground cultivating machine according to Claim 10, characterised in that a resilient or elastic element (46) is disposed between the U-shaped member (30) and the holder (21) and urges the coulter (17, 49, 62) into the operative position (42).

13. Ground cultivating machine according to Claim 1, characterised in that the coulter (17, 49, 62) is disposed so as to be laterally adjustable and settable.

14. Ground cultivating machine according to Claim 1, characterised in that the coulter (17, 49, 62) can be pivoted or swung from the operative position (42) into a transportation position (44).

15. Ground cultivating machine according to Claim 1, characterised in that the coulter (17, 49, 62) is disposed so as to be vertically adjustable.

16. Ground cultivating machine according to Claims 7 and 15, characterised in that the coulter (17, 49, 62) is disposed on the supporting arm (20) in a vertically adjustable manner.

17. Ground cultivating machine according to Claim 1, characterised in that the rear region (65) of the coulter (17, 49, 62) is provided with an inwardly orientated bent-over portion (66).

18. Ground cultivating machine according to Claim 17, characterised in that this bent-over portion (66) is orientated at least approximately in a transverse direction relative to the direction of travel (18).

19. Ground cultivating machine according to Claim 17, characterised in that the axle (67) of the bent-over portion (66) extends at least approximately vertically.

20. Ground cultivating machine according to Claim 17, characterised in that the axle (67) of the bent-over portion (66) extends in a forwardly inclined manner and slopes towards the centre of the machine.

21. Ground cultivating machine according to Claim 1, characterised in that at least the lower region (68) of the coulter (17, 49, 62) is provided with a forwardly inclined bent-over portion (69), which is orientated towards the centre of the machine.

22. Ground cultivating machine according to Claim 1, characterised in that the coulter (17, 49, 62) includes a runner (56), which is orientated in the direction of travel (18), and the runner (56) is provided with a forwardly ascending sliding face (57).

23. Ground cultivating machine according to Claim 1, characterised in that the coulter (17, 49, 62) itself is provided with an edge (71), which ascends in a forwardly inclined manner.

24. Ground cultivating machine according to Claim 7 or 10, characterised in that the supporting arm (20) of the coulter (17, 49, 62) is mounted on the frame (11) of the follower roller (8) by means of a pivot joint (58), which is similar to a universal joint.

25. Ground cultivating machine according to Claim 1, characterised in that the pulling point (76) for the coulters (72) is situated in the front region of the coulters (72).

26. Ground cultivating machine according to Claim 25, characterised in that a rigid supporting arm (73), which protrudes forwardly in the direction of travel (18), is disposed on the frame (11) of the follower roller (8), and each coulter (72) is disposed on the front end of this supporting arm (73).

27. Ground cultivating machine according to Claim 26, characterised in that the coulter (72) is mounted on the front end of the supporting arm (73) by means of a pivot joint (74) so as to be pivotable in a vertical plane, a supporting arm (78) being disposed between the pivot joint (74) and the coulter (72).

28. Ground cultivating machine according to Claim 27, characterised in that the pivotal axle (77) is disposed at a spacing (B) from the coulter (72).

29. Ground cultivating machine according to Claim 27, characterised in that the pivotal axis (77) extends inclinedly relative to the direction of travel (18).

30. Ground cultivating machine according to Claim 25, characterised in that a sliding runner (82) is disposed at the front end of the coulter (72), on the front surface when viewed in the direction of travel (18), the lower edge (83) of said runner ascending upwardly in an inclined or curved manner, when viewed in the direction of travel (18).

31. Ground cultivating machine according to Claim 30, characterised in that this sliding runner (82) is in the form of a U-shaped member (84).

FIG.1

FIG.2

EP 0 203 474 B1

FIG. 3

FIG. 4

FIG. 5

2

FIG. 6

FIG. 7

3

FIG. 8

EP 0 203 474 B1

FIG. 9

FIG. 10

FIG.11

FIG.12